# NEUE EUROPÄISCHE PATENTSCHRIFT

(11) **EP 1 578 658 B2**
(45) Veröffentlichungstag und Bekanntmachung des Hinweises auf die Entscheidung über den Einspruch: **27.02.2013**
(45) Hinweis auf die Patenterteilung: 03.01.2007
(21) Anmeldenummer: 03812582.9
(22) Anmeldetag: 31.10.2003
(51) Int. Cl.: B62D 53/08

(54) **SATTELKUPPLUNG**
SEMITRAILER COUPLING
SELLETTE D'ATTELAGE

(30) Priorität: 10.12.2002 DE 10257807
(43) Veröffentlichungstag der Anmeldung: 28.09.2005
(73) Patentinhaber: SAF-HOLLAND Verkehrstechnik GmbH, 78224 Singen-Hohentwiel (DE)
(72) Erfinder: ROTH-SCHULER, Christian, 78224 Singen (DE); SCHNEIDER, Dirk, 81371 München (DE)
(74) Vertreter: Müller Schupfner & Partner
(86) Internationale Anmeldenummer: PCT/EP2003/012171
(87) Internationale Veröffentlichungsnummer: WO 2004/052713

(56) Entgegenhaltungen:
- EP-A- 0 694 467
- WO-A-01/34454

## Beschreibung

Die Erfindung bezieht sich auf eine Sattelkupplung umfassend eine Kupplungsplatte und einen Lagerbock zur bewegbaren Befestigung der Kupplungsplatte an einem Rahmen eines Zugfahrzeuges, wobei der Lagerbock einen Lagerungsbereich und einen Befestigungsbereich aufweist, wobei der Lagerungsbereich zur schwenkbaren Lagerung der Kupplungsplatte und der Befestigungsbereich zur lösbaren Befestigung der Kupplungsplatte an dem Rahmen des Zugfahrzeuges ausgebildet sind, wobei in Fahrtrichtung und parallel zur Schwenkachse geschnitten, der Lagerungsbereich einen grösseren Querschnitt als der Befestigungsbereich aufweist, wobei der Lagerbock im Lagerungsbereich in Richtung der Schwenkachse eine Breite aufweist, die kleiner ist als die Breite eines Aufnahmebereiches, der zur Aufnahme des Lagerbocks an die Kupplungsplatte ausgebildet ist, derart, dass der Lagerungsbereich des Lagerbockes mit einem Spielraum in dem Aufnahmebereich der Kupplungsplatte angeordnet ist.

Im Kraftfahrzeugverkehr werden vermehrt Sattelschlepper mit Sattelkupplungen eingesetzt. Ein Zugfahrzeug weist eine Kupplungsplatte auf, in die ein Zapfen, der sogenannte Königszapfen des Anhängers eingekuppelt wird. Der Anhänger liegt dabei relativ frei beweglich auf einer Sattelkupplungsplatte des Zugfahrzeuges auf. Die Sattelkupplungsplatte ist über zwei Lagerböcke mit dem Rahmen des Zugfahrzeuges verbunden. Die Lagerböcke enthalten Lagerelemente, die quer zur Fahrtrichtung des Zugfahrzeuges angeordnet sind und ein Schwenken der Kupplungsplatte um eine Schwenkachse quer zur Fahrtrichtung ermöglichen.

Aus der WO 01/34454 A1 ist eine gattungsgemässe Sattelkupplung bekannt. Die Lagerböcke, die jeweils auf der linken und rechten Seite des Fahrzeugrahmens befestigt sind, sind mittels einer Querstrebe parallel zur Schwenkachse miteinander verbunden. Die Querstrebe kann auch als Vorsprung am jeweiligen Lagerbock auf der Innenseite des Fahrzeuges ausgebildet sein. Die Lagerböcke, die Vorsprünge und/oder die Querstreben sind über der waagrechten Fläche der Rahmenkonstruktion des Zugfahrzeuges angeordnet und leiten Kräfte in die waagrechte Fläche des Fahrzeugrahmens ein,

Ausgehend von diesem Stand der Technik ist es Aufgabe der Erfindung, eine Sattelkupplung anzugeben, die aus möglichst wenigen Einzelteilen aufgebaut ist, die möglichst wenig Gewicht aufweist und mit bestehenden Sattelkupplungsplatten kompatibel ist.

Diese Aufgabe wird gelöst durch eine Sattelkupplung umfassend eine Kupplungsplatte und einen Lagerbock zur bewegbaren Befestigung der Kupplungsplatte an einem Rahmen eines Zugfahrzeuges, wobei der Lagerbock einen Lagerungsbereich und einen Befestigungsbereich aufweist, wobei der Lagerungsbereich zur schwenkbaren Lagerung der Kupplungsplatte und der Befestigungsbereich zur lösbaren Befestigung der Kupplungsplatte an dem Rahmen des Zugfahrzeuges ausgebildet sind, wobei in Fahrtrichtung und parallel zur Schwenkachse geschnitten, der Lagerungsbereich einen grösseren Querschnitt als der Befestigungsbereich aufweist, wobei der Lagerbock im Lagerungsbereich in Richtung der Schwenkachse eine Breite aufweist, die kleiner ist als die Breite eines Aufnahmebereiches, der zur Aufnahme des Lagerbocks an die Kupplungsplatte ausgebildet ist, derart, dass der Lagerungsbereich des Lagerbockes mit einem einseitig frei gelassenen Spielraum in dem Aufnahmebereich der Kupplungsplatte angeordnet ist, wobei der Spielraum zum Auffangen der Relativbewegungen zwischen der Kupplungsplatte und dem Lagerbock in der Richtung der Schwenkachse im Bereich der Fahrzeuginnenseite des Lagerbockes ausgebildet ist, wobei die Sattelkupplung einen zweiten, gegenüberliegenden Lagerbock umfasst, bei dem ebenfalls auf der Fahrzeuginnenseite ein solcher Spielraum S vorgesehen ist.

Bevorzugte Weiterbildungen der Erfindung ergeben sich aus den abhängigen Ansprüchen.

Es ist von Vorteil, dass die Sattelkupplung aus möglichst wenigen Einzelteilen aufgebaut werden kann. Dies wird dadurch erreicht, dass die Lagerböcke aus einem einstückigen Gussformteil ausgebildet sind.

Ein Ausführungsbeispiel der Erfindung wird anhand der Figuren beschrieben. Es zeigen:
- Figur 1: eine dreidimensionale Sicht auf eine erfindungsgcmässe Sattelkupplung.
- Figur 2: eine Sicht auf die Sattelkupplung von Figur 1 in Fahrtrichtung und
- Figur 3: einen Schnitt durch einen Lagerbock senkrecht zur Fahrtrichtung.

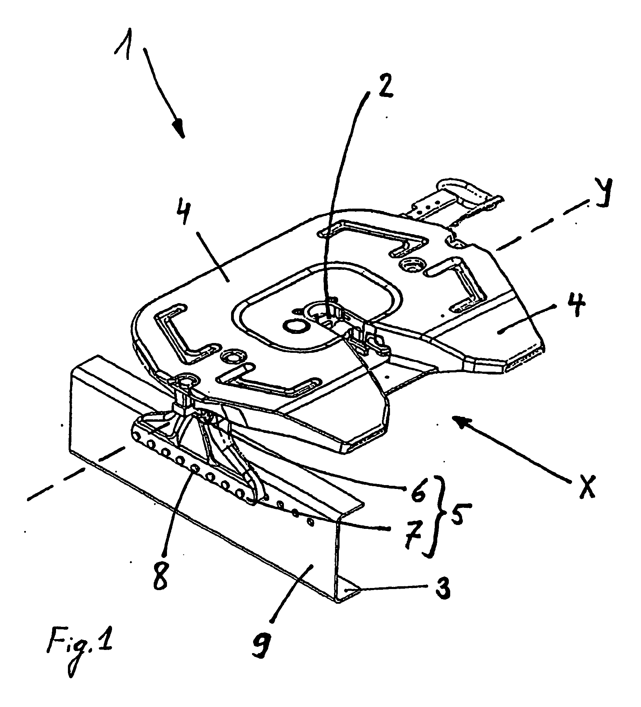

In Figur 1 ist eine Sattelkupplung 1 dreidimensional dargestellt. Die Sattelkupplung 1 ist an einem hier nicht dargestellten Zugfahrzeug angeordnet und dient zur beweglichen Verbindung des Zugfahrzeuges mit einem hier ebenfalls nicht dargestellten Anhänger einer Sattelschlepperkombination. Wenn der Anhänger mit dem Zugfahrzeug gekuppelt ist, befindet sich ein sogenannter Königszapfen, der auf der vorderen unteren Seite des Anhängers angeordnet ist, in einer Kupplungsklaue 2 der Sattelkupplung 1. Vom Zugfahrzeug ist lediglich ein Teilbereich eines Rahmens 3 dargestellt. Die Sattelkupplung 1 umfasst im wesentlichen eine Kupplungsplatte 4 und zwei Lagerböcke 5, von denen hier nur einen Lagerbock 5 auf der linken Seite in Fahrtrichtung x des Zugfahrzeuges dargestellt ist.

Der Lagerbock 5 weist zwei Bereiche mit unterschiedlichen Funktionen auf: einen Lagerungsbereich 6 und einen Befestigungsbereich 7. Im Lagerungsbereich 6 befinden sich Lagerelemente, die zur schwenkbaren Lagerung der Kupplungsplatte 4 um eine Schwenkachse y dienen. Die Schwenkachse y verläuft quer zur Fahrtrichtung x des Zugfahrzeuges. Im Befestigungsbereich 7 sind Schrauben 8 ersichtlich, mit denen der Lagerbock 5 am Rahmen 3 des Zugfahrzeuges befestigt ist. Der Lagerbock 5 wird in vorteilhafter Weise mittels Schrauben 8 an der senkrechten Seitenfläche 9 des Fahrzeugrahmens 3 befestigt. Durch die seitliche Verschraubung wird erreicht, dass die Montage und Demontage denkbar einfach auch an bestehenden Fahrzeugrahmen durchgeführt werden kann.

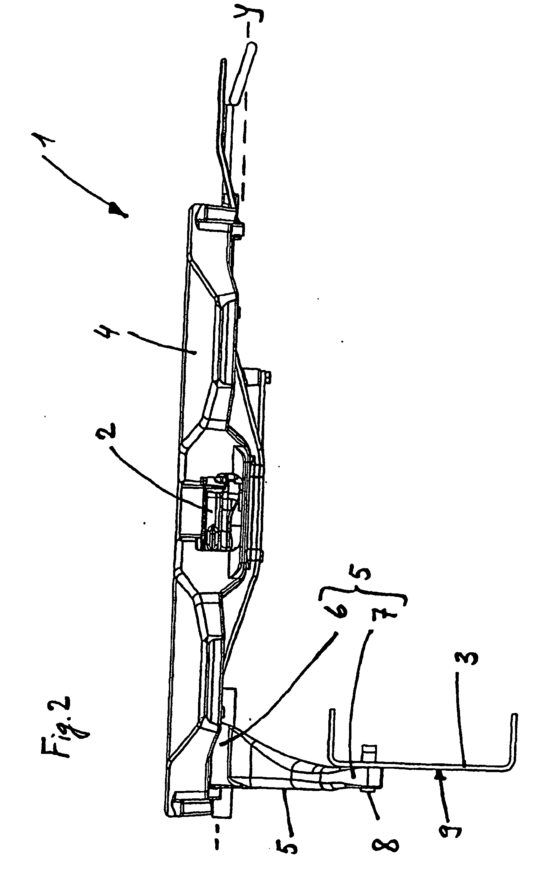

In Figur 2 ist die Sattelkupplung 1 von Figur 1 nochmals, gesehen in der Fahrtrichtung x des Zugfahrzeuges dargestellt. Hier ist gut ersichtlich, wie der Befestigungsbereich 7 des Lagerbockes 5 mit Schrauben 8 an der senkrechten Seitenfläche des Fahrzeugrahmens 3 befestigt ist. Auf der waagrechten Fläche des Fahrzeugrahmens 3, die im zusammengebauten Zustand des Zugfahrzeuges eine denkbar schlecht zugängliche Fläche ist, sind keine Befestigungen oder Abstützungen erforderlich. In Figur 2 wurde zur besseren Übersichtlichkeit der zweite Lagerbock 5 auf der rechten Seite der Kupplungsplatte 4 weggelassen. Die Bezugszeichen in Figur 2 beziehen sich auf den gleichen Merkmalen, wie in Figur 1 beschrieben.

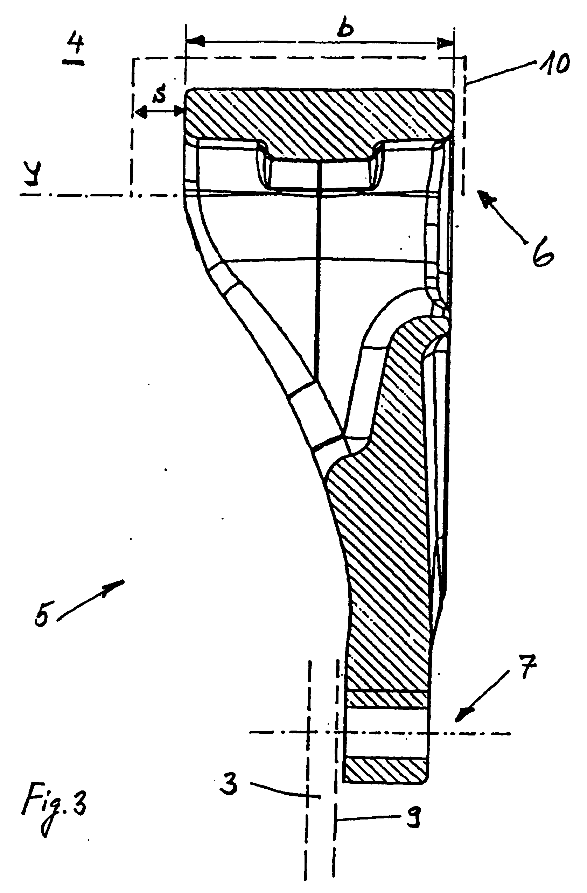

In Figur 3 ist der Lagerbock 5 für sich alleine geschnitten senkrecht zur Fahrtrichtung x dargestellt. Mit gestrichelten Linien im Lagerungsbereich 6 ist ein Aufnahmebereich 10, der auf der Unterseite der Kupplungsplatte 4 zur Aufnahme des Lagerbockes 5 vorgesehen ist, schematisch angedeutet. Mit weiteren gestrichelten Linien im Befestigungsbereich 7 ist die waagrechte Seitenfläche 9 des Fahrzeugrahmens 3 zur Befestigung des Lagerbockes 5 angedeutet. Im Lagerungsbereich 6 weist der Lagerbock 5 eine Breite b auf, die mindestens 2.5 mal so gross ist als die Breite des Lagerbockes 5 im Befestigungsbereich 7. Der Lagerbock 5 wird als einstückiges Gussformteil hergestellt.

Bei der Dimensionierung des Gussformteiles wird die Form so berechnet, dass die erforderliche Steifigkeit bei einem minimalen Formteilgewicht erreicht wird. Auf der Fahrzeuginnenseite wird der Lagerungsbereich 6 nach dem Giessen mechanisch derart bearbeitet, dass im zusammengebauten Zustand zwischen dem Lagerungsbereich 6 des Lagerbockes 5 und dem Aufnahmebereich 10 der Sattelkupplungsplatte 4 einen Spielraum S frei bleibt. Dieser einseitig frei gelassene Spielraum S auf der Fahrzeuginnenseite dient zum Ausgleichen von Bewegungen der Kupplungsplatte 4 in Richtung der Schwenkachse y. Bei dem gegenüberliegenden, hier nicht abgebildeten Lagerbock ist ebenfalls auf der Fahrzeuginnenseite ein solcher Spielraum S vorgesehen.

Diese Spielräume S nehmen jeweils bei einer Verformung in Richtung der Schwenkachse y die Lagerungsbereiche 6 der Lagerböcke 5 auf. Hiermit wird erreicht, dass Querkräfte, die im Betriebszustand auf die Sattelkupplung 1 von der Fahrzeugaussenseite in Richtung auf die Fahrzeuginnenseite wirken, ausgeglichen werden.

Eine Querstrebe, die bisher zur Aufnahme dieser Querkräfte zwischen den Lagerböcken 5 montiert wurde, ist nicht mehr erforderlich. Die Montage und Demontage der Querstrebe in dem schwer zugänglichen Bereich unter der Kupplungsplatte 4 entfällt. Die Lagerböcke 5 können an bestehenden Sattelkupplungen und bestehenden Fahrzeugrahmen angepasst werden. Die vorliegende Sattelkupplung 1 mit den neu dimensionierten Lagerböcken 5 ermöglicht, bei gleichbleibender Tragfähigkeit, eine Gewichts- und daraus folgend eine Treibstoffeinsparung für die Sattelschlepperkombination.

## Patentansprüche

1. Sattelkupplung (1) umfassend eine Kupplungsplatte (4) und einen Lagerbock (5) zur bewegbaren Befestigung der Kupplungsplatte (4) an einem Rahmen (3) eines Zugfahrzeuges, wobei der Lagerbock (5) einen Lagerungsbereich (6) und einen Befestigungsbereich(7) aufweist, wobei der Lagerungsbereich (6) zur schwenkbaren Lagerung der Kupplungsplatte (4) und der Befestigungsbereich (7) zur lösbaren Befestigung der Kupplungsplatte (4) an dem Rahmen (3) des Zugfahrzeuges ausgebildet sind, wobei in Fahrtrichtung (x) und parallel zur Schwenkachse (y) geschnitten, der Lagerungsbereich (6) einen größeren Querschnitt als der Befestigungsbereich (7) aufweist, wobei der Lagerbock (5) im Lagerungsbereich (6) in Richtung der Schwenkachse (y) eine Breite (b) aufweist, die kleiner ist als die Breite eines Aufnahmebereiches (10), der zur Aufnahme des Lagerbocks (5) an die Kupplungsplatte (4) ausgebildet ist, derart, dass der Lagerungsbereich (6) des Lagerbockes (5) mit einem einseitig frei gelassenen Spielraum (S) in dem Aufnahmebereich (10) der Kupplungsplatte (4) angeordnet ist, wobei der Spielraum (S) zum Auffangen der Relativbewegungen zwischen der Kupplungsplatte (4) und dem Lagerbock (5) in der Richtung der Schwenkachse (y) im Bereich der Fahrzeuginnenseite des Lagerbockes (5) ausgebildet ist, wobei die Sattelkupplung einen zweiten, gegenüberliegenden Lagerbock umfasst, bei dem ebenfalls auf der Fahrzeuginnenseite ein solcher Spielraum S vorgesehen ist.

2. Sattelkupplung nach dem Anspruch 1, **dadurch gekennzeichnet, dass** der Befestigungsbereich (7) des Lagerbockes (5) mittels Schrauben (8) lösbar befestigbar an einer senkrecht verlaufend angeordneten Seitenfläche (9) des Rahmens (3) des Zugfahrzeuges angeordnet ist.

3. Sattelkupplung nach mindestens einem der Ansprüche 1 oder 2, **dadurch gekennzeichnet, dass** die Breite (b) des Lagerungsbereiches (6) in der Richtung der Schwenkachse (y) mindestens 2,5-mal so groß ist wie die Breite des Befestigungsbereiches (7) des Lagerbockes (5).

4. Sattelkupplung nach mindestens einem der Ansprüche 1 bis 3, **dadurch gekennzeichnet, dass** der Lagerbock (5) aus einem einstückigen Gussformteil ausgebildet ist.

## Claims

1. Fifth wheel (1) comprising a coupling plate (4) and a bearing block (5) for movably fastening the coupling plate (4) to a frame (3) of a tractor vehicle, the bearing block (5) comprising a support zone (6) and a fastening zone (7), the support zone (6) being designed for swivellable support of the coupling plate (4) and the fastening zone (7) being designed for detachable fastening of the coupling plate (4) to the frame (3) of the tractor vehicle, the support zone (6) having a larger cross-section than the fastening zone (7) in the direction of travel (x) and in section parallel to the swivel axis (y), the bearing block (5) having a width (b) in the support zone (6), in the direction of the swivel axis (y), which is smaller than the width of a receiving zone (10), which is designed to accommodate the bearing block (5) on the coupling plate (4) in such a way that the support zone (6) of the bearing block (5) is arranged with play (S) left free on one side in the receiving zone (10) of the coupling plate (4), wherein the play (S) is designed to absorb the relative movement between the coupling plate (4) and the bearing block (5) in the direction of the swivel axis (y) in the area of the vehicle inboard side of the bearing block (5), wherein the fifth wheel has a second, opposing bearing block where such play (S) is likewise provided on the vehicle inboard side.

2. Fifth wheel according to Claim 1, **characterized in that** the fastening zone (7) of the bearing block (5) is arranged so as to be detachably fastenable by means of bolts (8) to a vertically extending side face (9) of the frame (3) of the tractor vehicle.

3. Fifth wheel according to at least one of Claims 1 or 2, **characterized in that** the width (b) of the support zone (6) in the direction of the swivel axis (y) is at least 2.5 times as big as the width of the fastening zone (7) of the bearing block (5).

4. Fifth wheel according to at least one of Claims 1 to 3, **characterized in that** the bearing block (5) is made of a one-piece casting.

## Revendications

1. Sellette d'attelage (1) comprenant une plaque d'attelage (4) et un palier (5) pour la fixation mobile de la plaque d'attelage (4) à un châssis (3) d'un véhicule tracteur, le palier (5) présentant une zone de support (6) et une zone de fixation (7), la zone de support (6) étant prévue pour le support pivotant de la plaque d'attelage (4) et la zone de fixation (7) étant prévue pour la fixation desserrable de la plaque d'attelage (4) sur le châssis (3) du véhicule tracteur, où, dans la direction de conduite (x) et en coupe parallèlement à l'axe de pivotement (y), la zone de support (6) présente une plus grande section transversale que la zone de fixation (7), le palier (5) dans la zone de support (6) présentant dans la direction de l'axe de pivotement (Y) une largeur (B) inférieure à la largeur d'une zone de réception (10) qui est prévue pour recevoir le palier (5) sur la plaque d'attelage (4) de telle sorte que la zone de support (6) du palier (5) soit disposée avec un certain jeu (S) laissé libre d'un côté dans la zone de réception (10) de la plaque d'attelage (4), le jeu (S) étant prévu pour accommoder les mouvements relatifs entre la plaque d'attelage (4) et le palier (5) dans la direction de l'axe de pivotement (y) dans la région du côté du palier (5) tourné vers l'intérieur du véhicule, le selette d'attellage comprenant un deuxième palier opposé où est également prévu un tel jeu (S) du côté intérieur du véhicule.

2. Sellette d'attelage selon la revendication 1, **caractérisée en ce que** la zone de fixation (7) du palier (5) est disposée de manière à pouvoir être fixée au moyen de vis (8) de manière desserrable sur une face latérale (9) s'étendant verticalement du châssis (3) du véhicule tracteur.

3. Sellette d'attelage selon l'une quelconque des revendications 1 ou 2, **caractérisée en ce que** la largeur (b) de la zone de support (6) dans la direction de l'axe de pivotement (y) est au moins 2,5 fois plus grande que la largeur de la zone de fixation (7) du palier (5).

4. Sellette d'attelage selon au moins l'une quelconque des revendications 1 à 3, **caractérisée en ce que** le palier (5) est réalisé à partir d'une pièce coulée d'une seule pièce.
